# EUROPEAN PATENT SPECIFICATION

(11) **EP 2 913 988 B1**
(45) Date of publication and mention of the grant of the patent: **13.05.2020**
(21) Application number: 14200698.0
(22) Date of filing: 31.12.2014
(51) Int. Cl.: H04M 1/02, H05K 5/02

(54) **Housing, electronic device using same, and method for making same**
Gehäuse, elektronische Vorrichtung damit und Verfahren zur Herstellung davon
Boîtier, dispositif électronique l'utilisant et son procédé de fabrication

(30) Priority: 26.02.2014 CN 201410065545
(43) Date of publication of application: 02.09.2015
(73) Proprietor: Shenzhen Futaihong Precision Industry Co., Ltd., Shenzhen City, Guangdong Province 518109 (CN); FIH (Hong Kong) Limited, Hong Kong (HK)
(72) Inventor: Gu, Chang-Hai, 518109 Shenzhen City (CN); Liu, Xiao-Kai, 518109 Shenzhen City (CN); Qin, Yao-Yao, 518109 Shenzhen City (CN)
(74) Representative: CMS Cameron McKenna Nabarro Olswang LLP

(56) References cited:
- EP-A1- 2 670 116
- EP-A2- 2 498 336
- WO-A1-2011/076582

## Description

### FIELD

The disclosure generally relates to a housing, an electronic device using the housing, and a method for making the housing.

### BACKGROUND

Metal housings are widely used for electronic devices such as mobile phones or personal digital assistants (PDAs). Antennas are also important components in electronic devices. But the signal of the antenna located in the metal housing is often shield by the metal housing.

WO2011/076582 provides an antenna arrangement for a mobile device. The mobile device comprises radio frequency circuits and a ground plane (317). The antenna arrangement comprises a conductive element (300) and at least one feeding element (306). Said feeding element comprising a conductive pattern is arranged to be connected to the radio frequency circuits wherein the conductive element is a sheet having an outer first surface (315) and an inner second surface (316). The conductive element comprises at least two radiating elements (301, 302). The radiating elements are arranged to be fed through said feeding element. Said radiating elements are physically separated from each other by isolation means (303) and said feeding element has an extension plane with one side of the feeding element facing the inner second surface of the conductive element with a gap between the conductive element and the conductive pattern of said feeding element.

EP2498336A2 discloses a wireless electronic device (10). The wireless electronic device (10) may include antenna structures (40U) and antenna tuning circuitry. The device (10) may include a display (14) mounted within a housing (12). A peripheral conductive member (16) may run around the edges of the display and housing. Dielectric-filled gaps (18C) may divide the peripheral conductive member (16) into individual segments (16-1, 16-2). A ground plane (G) may be formed within the housing. The ground plane (G) and the segments (16-1, 16-2) of the peripheral conductive member (16) may form antennas in upper and lower portions of the housing (12). The antenna tuning circuitry may include switchable inductor circuits (210') and variable capacitor circuits (212-1) for the upper and lower antennas. The switchable inductor circuits (210') associated with the upper antenna may be tuned to provide coverage in at least two high-band frequency ranges of interest, whereas the variable capacitor circuits (212-1) associated with the upper antenna may be tuned to provide coverage in at least two low-band frequency ranges of interest.

Therefore, there is room for improvement within the art.

### SUMMARY

According to a first aspect of the disclosure, a housing according to claim 1 is provided.

According to a second aspect of the disclosure, a method of making a housing according to claim 6 is provided.

According to a third aspect of the disclosure, an electronic device according to claim 10 is provided.

### BRIEF DESCRIPTION OF THE DRAWINGS

Many aspects of the printed circuit board and the electronic component can be better understood with reference to the following drawings. The components in the drawings are not necessarily drawn to scale, the emphasis instead being placed upon clearly illustrating the principles of the printed circuit board and the electronic component.
FIG. 1 is an isometric view of an electronic device, according to an exemplary embodiment.
FIG. 2 is an isometric view of a housing of the electronic device shown in FIG. 1.
FIG. 3 is an exploded, isometric view of the housing shown in FIG. 2.
FIG. 4 is a cross-sectional view of the housing along line IV-IV of FIG. 2.

### DETAILED DESCRIPTION

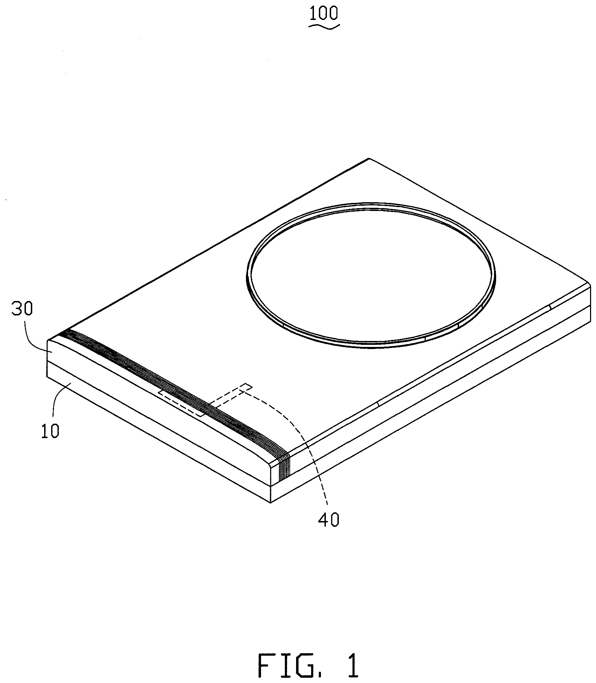

FIG. 1 illustrates an electronic device 100 according to an exemplary embodiment. The electronic device 100 can be, but not limited to being, a mobile phone, a personal digital assistant or a panel computer. The electronic device 100 includes a main body 10, a housing 30 assembled to the main body 10, and an antenna 40 located inside the housing 30.

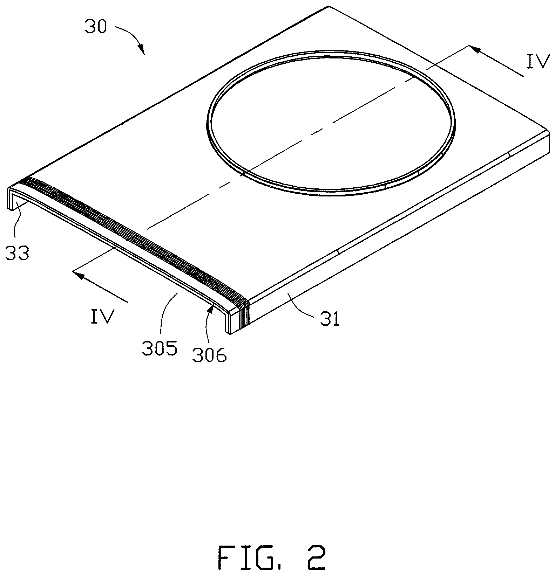

Referring to FIGS. 1-2, in one exemplary embodiment, the housing 30 can be a back cover of the electronic device 100. The housing 30 includes a base 31 and a reinforcement layer 33 attached to an internal surface 306 of the base 31. The base 31 further includes a receiving space 305 cooperating with main body 10 to receive internal elements of the electronic device 100, such as the antenna 40, battery (not shown) and so on.

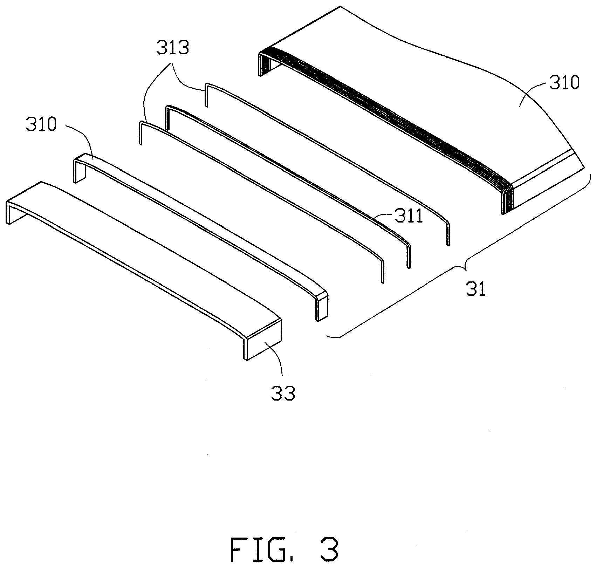

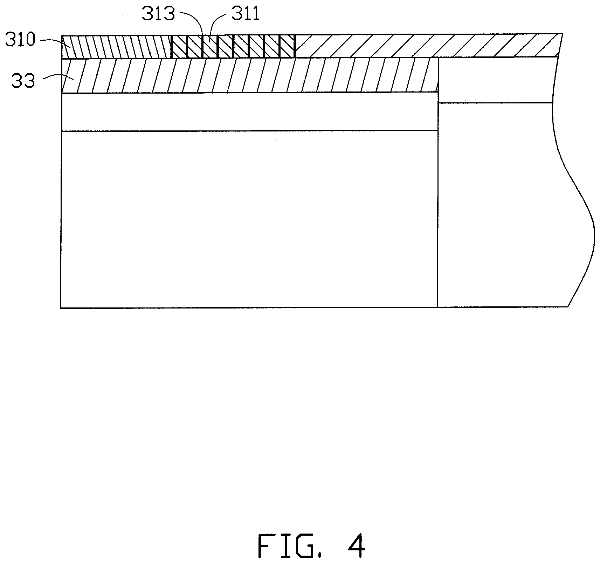

Referring to FIGS. 1 and 3-4, the base 31 is three-dimensionally shaped. In one exemplary embodiment, the base 31 is substantially U-shaped. The base 31 includes at least one main portion 310, a plurality of metal sheets 311 and a plurality of non-conductive spacers 313. In one exemplary embodiment, the base 31 includes two main portions 310. The main portions 310 and the metal sheets 311 are made of metal. The metal can be selected from a group consisting of aluminum alloy, titanium alloy, magnesium alloy, and stainless steel. The metal sheets 311 and the spacers 313 are sandwiched between the two main portions 310, and each metal sheet 311 alternates with one spacer 313. Each two adjacent metal sheets 311 are connected to each other by one spacer 313 located between the two metal sheets 311. A spacer 313 is positioned between each main portion 310 and a metal sheet 311 adjacent to the main portion 310, thereby bonding the main portions 310 with the metal sheets 311 adjacent to the main portions 310 together. The spacers 313 are made of dielectric resin composition, such as a polyurethane ultraviolet curing resin composition. The spacers 313 can also be made of anodic oxide film, such as anodic alumina film, anodic titanium oxide film, or anodic magnesium oxide film. Each metal sheet 311 has a thickness of about 0.4 mm to about 1.0 mm along a direction from an adjacent spacer 313 located at one sided of the metal sheet 311 to another adjacent metal sheet 311 located at an opposite side of the metal sheet 311. Each spacer 313 has a thickness of about 20 µm to about 60 µm along a direction from an adjacent spacer 313 located at one sided of the metal sheet 311 to another adjacent metal sheet 311 located at an opposite side of the metal sheet 311, thereby creating a distance between each main portion 310 and the adjacent metal sheet 311 of about 20 µm to about 60 µm, and creating a distance between each two adjacent metal sheets 311 of about 20 µm to about 60 µm. The thickness of each spacer 313 can also be about 0.01mm to about 0.1mm along a direction from an adjacent spacer 313 located at one sided of the metal sheet 311 to another adjacent metal sheet 311 located at an opposite side of the metal sheet 311, thereby creating a distance between each main portion 310 and the adjacent metal sheet 311 of about 0.01mm to about 0.1mm, and creating a distance between each two adjacent metal sheets 311 of about 0.01mm to about 0.1mm. Said distances are corresponding to the antenna 40. The metal sheets 311 are substantially U-shaped. Each spacer 313 is adhered to adjacent metal sheets 311. Each spacer 313 is also substantially U-shaped to engage with the shape of the metal sheets 311. The spacers 313 are also U-shaped.

The base 31 includes the internal surface 306 facing the receiving space 305.

The reinforcement layer 33 is formed on the internal surface 306. The reinforcement layer 33 covers the metal sheets 311 and the spacers 313, and entirely or partially covers an end portion of the main portion 310 connected to the spacers 313. As such, the main portion 310, the metal sheets 311, and the spacers 313 are bonded together through the reinforcement layer 33. The reinforcement layer 33 can further enhance a bonding strength among the main portion 310, the metal sheets 311 and the spacers 313 respectively. The reinforcement layer 33 is made of resin selected one or more from a group consisting of polyphenylene sulfide (PPS), polybutylene terephthalate (PBT), nylon (PA), polyethylene terephthalate (PET), polytrimethylene terephthalate (PTT), Polyetherimide (PEI), polyether ether ketone (PEEK), poly(ethylene-co-1,4-cyclohexylenedimethylene terephthalate) (PCT), and their modified materials.

When the housing 30 is mounted to the main body 10, a portion of the housing 30 made up of the metal sheets 311 and the spacers 313 are aligned with the antenna 40.

An exemplary method for making the housing 30 can include the following steps.

A preliminary housing (not shown) having a desired three-dimensional shape of the housing 30 is provided. The preliminary housing can be made by casting, punching, or computer number control.

Sections of a portion of the preliminary housing corresponding to the antenna 40 are cut off by laser cutting technology, thereby forming a plurality of gaps (not shown). Remaining sections of the preliminary housing are spaced by the gaps and form the plurality of metal sheets 311 and the at least one main portion 310. In at least one embodiment, the gaps are through gaps, and the preliminary housing can be divided into a plurality of metal sheets 311 and two main portions 310 by the through gaps. In another embodiment, the gaps are positioned wholly within the preliminary housing, and the preliminary housing divided into a plurality of metal sheets 311 and a main portion 310 by the gaps.

The main portion 310 and the metal sheets 311 are arranged to be aligned with each other. Each main portion 310 and the adjacent metal sheet 311 are spaced from each other by the through gaps, each two adjacent metal sheets 311 are also spaced from each other by the through gaps. Liquid resin composition is filled into the through gaps existing between each main portion 310 and the adjacent metal sheet 311, and the through gaps between each two adjacent metal sheets 311. The resin composition is then solidified to form the spacers 313 by UV irradiation at room temperature. The thickness of each spacer 313 is about 20 µm to about 60 µm along a direction from an adjacent spacer 313 located at one side of metal sheet 311 to another adjacent metal sheet 311 located at an opposite side of the metal sheet 311. The spacers 313, the metal sheets 311, and the main portion 310 cooperatively forming the base 31. The base 31 is three-dimensionally shaped, and has the receiving space 305.

The reinforcement layer 33 is formed on the internal surface 306. The reinforcement layer 33 covers the metal sheets 311 and the spacers 313, and totally or partly covers an end of the main portion 310 bonded with the spacers 313 to enhance the bonding strength among the main portion 310, the metal sheets 311, and the spacers 313 respectively. The reinforcement layer 33 can be made of plastic. The reinforcement layer 33 and the base 31 cooperatively forms the housing 30.

The reinforcement layer 33 can be formed by the following two methods:
In a first method, a plurality of small holes (not shown) are formed on the base 31 by chemical etching or electrochemical etching. The diameter of holes is about 15 µm to about 100 µm. Then, molten resin is injected on the internal surface 306 and flows through the holes and by an injection molding process to form the reinforcement layer 33 attached to the internal surface 306 of the base 31 and embedded in the holes.
In a second method, a thermosetting resin adhesive is coated on the internal surface 306 of the base 31, and the thermosetting resin adhesive is naturally dried or dried by heating to form an adhesive layer. The reinforcement layer 33 is then formed on the adhesive layer by injection. The thermosetting resin adhesive can enhance a bonding strength between the metallic base 31 and plastic reinforcement layer 33 respectively.

In another exemplary embodiment, a method for making the housing 30 may include the following steps.

At least one main portion 310 which can be made by casting, punching, or computer number control is provided. When a number of the main portion 310 is more than one. A notch between the main portions 310 is retained corresponding to the antenna 40. A plurality of small holes is formed on the main body 310 by chemical etching or electrochemical etching. The diameter of the small holes is about 15 µm to about 100 µm.

A plurality of metal sheets 311, which can be made by punching, is provided. The metal sheets 311 can be positioned in the notch. A plurality of non-conductive spacers 313 is formed between the main portion 310 and the adjacent metal sheet 313, and between each two adjacent metal sheets 311 by anodic oxidation or coating non-conductive resin composition on a lateral side of the metal sheets 311. The thickness of each spacer 313 is about 0.01 mm to about 0.1 mm along a direction from an adjacent spacer 313 located at one side of metal sheet 311 to another adjacent metal sheet 311 located at an opposite side of the metal sheet 311. A plurality of micropores (not shown) is formed on each lateral side of the metal sheets 311. The plurality of micropores formed on metal sheets 311 correspond to the plurality of micropores on formed adjacent metal sheets 311.

Liquid plastic composition is filled into the small holes formed on the main body 310 and micropores formed on metal sheets 311, and coated on the internal surface 306 of the base body 31 by insert molding technology to bond the metal sheets 311 and the main body 310 together. The plastic composition is then dried to form the reinforcement layer 33. The spacers 313, the metal sheets 311 and the main body 310 cooperatively form the base body 31. The reinforcement layer 33 covers the internal surface 306 of the base body 31. In other words, the reinforcement layer 33 covers the lateral surface of the main body 310, the metal sheets 311 and the spacers 313. Then the superfluous plastic can be removed by the electric discharge machines. Finally the housing 30 can be polished or decorated.

The metal sheets 311 are spaced from each other by the non-conductive spacers 313. The metal sheets 311 are connected to each other by the spacer layer 313, and the reinforcement layer 33 further enhances the bonding strength among the main portion 310, the metal sheets 311 and the spacers 313 respectively.

It is to be understood that even though numerous characteristics and advantages of the present embodiments have been set forth in the foregoing description, together with details of the structures and functions of the embodiments, the disclosure is illustrative only, and changes may be made in detail, especially in matters of shape, size, and arrangement of parts within the principles of the disclosure to the full extent indicated by the broad general meaning of the terms in which the appended claims are expressed.

## Claims

1. A housing (30), comprising a main portion (310); **characterized in that** the main portion (310) defines a notch; the housing (30) further comprises at least a metal sheet (311) and a plurality of spacers (313), for the at least a metal sheet (311) and the plurality of spacers (313) alternately positioning in the notch, and, the at least a metal sheet (311) and the main portion (310) bonded together by the plurality of spacers (313).

2. The housing (30) as claimed in claim 1, **characterized in that** each of the plurality of spacers (313) is composed of plastic composition.

3. The housing (30) as claimed in claim 1, **characterized in that** each of the plurality of spacers (313) has a thickness of about 0.01 mm to about 0.1 mm along a direction from an adjacent spacer (313) located at one side of the metal sheet (311) to another adjacent metal sheet (311) located at an opposite side of the metal sheet (311).

4. The housing (30) as claimed in claim 1, **characterized in that** a thickness of the at least a metal sheet (311) is about 0.4 mm to about 1.0 mm along a direction from an adjacent spacer (313) located at one side of the metal sheet (311) to another adjacent metal sheet (311) located at an opposite side of the metal sheet (311).

5. The housing (30) as claimed in claim 2, **characterized in that** each of the plurality of spacers (313) is made of resin composition by UV irradiation, anodic alumina film, anodic titanium oxide film, or anodic magnesium oxide film.

6. A method of making a housing (30) comprising providing a main portion (310), **characterized in that** the main portion (310) has a notch; the method further comprises:
providing at least a metal sheet (311), locating the at least a metal sheet (311) in the notch; and
forming a plurality of spacers (313) between the main portion (310) and the at least a metal sheet (311), for the at least a metal sheet (311) and the a plurality of spacers (313) alternately positioning in the notch, and, the at least a metal sheet (311) and the main portion (310) bonded together by the plurality of spacers (313).

7. The method as claimed in claim 6, **characterized in that** the method further comprises forming a plurality small holes on the main portion (310) and the at least a metal sheet (311) by chemical etching or electrochemical etching, wherein a diameter of each of the holes is about 15 µm to about 100 µm.

8. The method as claimed in claim 6, **characterized in that** each of the plurality of spacers (313) has a thickness of about 0.01 mm to about 0.1 mm along a direction from an adjacent spacer (313) located at one side of the metal sheet (311) to another adjacent metal sheet (311) located at an opposite side of the metal sheet (311).

9. The method as claimed in claim 6, **characterized in that** a thickness of the metal sheet (311) is about 0.4 mm to about 1.0 mm along a direction from an adjacent spacer (313) located at one side of the metal sheet (311) to another adjacent metal sheet (311) located at an opposite side of the metal sheet (311).

10. An electronic device (100), comprising:
a main body (10), a housing (30) mounted on the main body (10), and an antenna (40) assembled in the housing (30); the electronic device (100) **characterized in that**
the housing (30) is as claimed in claim 1; and
the at least a metal sheet (311) and the plurality of spacers (313) positionally corresponding to the antenna (40).

11. The electronic device (100) as claimed in claim 10, **characterized in that** each of the plurality of spacers (313) is composed of plastic composition.

12. The electronic device (100) as claimed in claim 10, **characterized in that** each of the plurality of spacers (313) has a thickness of about 0.01 mm to about 0.1 mm along a direction from an adjacent spacer (313) located at one side of the metal sheet (311) to another adjacent metal sheet (311) located at an opposite side of the metal sheet (311).

13. The electronic device (100) as claimed in claim 10, **characterized in that** a thickness of the metal sheet (311) is about 0.4 mm to about 1.0 mm along a direction from an adjacent spacer (313) located at one side of the metal sheet (311) to another adjacent metal sheet (311) located at an opposite side of the metal sheet (311).

14. The electronic device (100) as claimed in claim 11, **characterized in that** each of the plurality of spacers (313) is made of resin composition by UV irradiation, anodic alumina film, anodic titanium oxide film, or anodic magnesium oxide film.

## Patentansprüche

1. Gehäuse (30), umfassend einen Hauptabschnitt (310);
**dadurch gekennzeichnet, dass** der Hauptabschnitt (310) eine Kerbe definiert;
wobei das Gehäuse (30) ferner mindestens ein Metallblech (311) und mehrere Abstandshalter (313), für das mindestens eine Metallblech (311) und die mehreren Abstandshalter (313), die abwechselnd in der Kerbe angeordnet sind, und das mindestens eine Metallblech (311) und der Hauptabschnitt (310) durch die mehreren Abstandshaltern (313) miteinander verbunden sind, umfasst.

2. Gehäuse (30) nach Anspruch 1, **dadurch gekennzeichnet, dass** jeder der mehreren Abstandshalter (313) aus einer Kunststoffzusammensetzung besteht.

3. Gehäuse (30) nach Anspruch 1, **dadurch gekennzeichnet, dass** jeder der mehreren Abstandshalter (313) entlang einer Richtung von einem an einer Seite des Metallblechs (311) angeordneten, benachbarten Abstandshalter (313) zu einem an einer gegenüberliegenden Seite des Metallblechs (311) angeordneten, anderen benachbarten Abstandshalter (311) eine Dicke von etwa 0,01 mm bis etwa 0,1 mm aufweist.

4. Gehäuse (30) nach Anspruch 1, **dadurch gekennzeichnet, dass** eine Dicke des mindestens einen Metallblechs (311) entlang einer Richtung von einem an einer Seite des Metallblechs (311) angeordneten, benachbarten Abstandshalter (313) zu einem an einer gegenüberliegenden Seite des Metallblechs (311) angeordneten, anderen benachbarten Abstandshalter (311) von etwa 0,4 mm bis etwa 1,0 mm beträgt.

5. Gehäuse (30) nach Anspruch 2, **dadurch gekennzeichnet, dass** jeder der mehreren Abstandshalter (313) durch UV-Bestrahlung aus einer Kunstharzzusammensetzung, anodischer Aluminiumoxidfolie, anodischer Titanoxidfolie oder anodischer Magnesiumoxidfolie gefertigt ist.

6. Verfahren zum Herstellen eines Gehäuses (30), umfassend ein Bereitstellen eines Hauptabschnitts (310), **dadurch gekennzeichnet, dass** der Hauptabschnitt (310) eine Kerbe aufweist;
wobei das Verfahren ferner Folgendes umfasst:
Bereitstellen mindestens eines Metallblechs (311), Fixieren des mindestens einen Metallblechs (311) in der Kerbe; und
Ausbilden mehrerer Abstandshalter (313) zwischen dem Hauptabschnitt (310) und dem mindestens einen Metallblech (311), für das mindestens eine Metallblech (311) und die mehreren Abstandshalter (313), die abwechselnd in der Kerbe angeordnet sind, und das mindestens eine Metallblech (311) und der Hauptabschnitt (310) durch die mehreren Abstandshaltern (313) miteinander verbunden sind.

7. Verfahren nach Anspruch 6, **dadurch gekennzeichnet, dass** das Verfahren ferner das Ausbilden mehrerer kleiner Löcher an dem Hauptabschnitt (310) und dem mindesten einen Metallblech (311) durch chemisches Ätzen oder elektrochemisches Ätzen umfasst, wobei ein Durchmesser eines jedes der Löcher etwa 15 µm bis etwa 100 µm beträgt.

8. Verfahren nach Anspruch 6, **dadurch gekennzeichnet, dass** jeder der mehreren Abstandshalter (313) entlang einer Richtung von einem an einer Seite des Metallblechs (311) angeordneten, benachbarten Abstandshalter (313) zu einem an einer gegenüberliegenden Seite des Metallblechs (311) angeordneten, anderen benachbarten Abstandshalter (311) eine Dicke von etwa 0,01 mm bis etwa 0,1 mm aufweist.

9. Verfahren nach Anspruch 6, **dadurch gekennzeichnet, dass** eine Dicke des mindestens einen Metallblechs (311) entlang einer Richtung von einem an einer Seite des Metallblechs (311) angeordneten, benachbarten Abstandshalter (313) zu einem an einer gegenüberliegenden Seite des Metallblechs (311) angeordneten, anderen benachbarten Abstandshalter (311) von etwa 0,4 mm bis etwa 1,0 mm beträgt.

10. Elektronische Vorrichtung (100), Folgendes umfassend:
einen Hauptkörper (10), ein an dem Hauptkörper (10) angebrachtes Gehäuse (30) und eine in dem Gehäuse (30) eingebaute Antenne (40);
wobei die elektronische Vorrichtung (100), **dadurch gekennzeichnet, dass** es sich um das Gehäuse (30) nach Anspruch 1 handelt; und
das mindestens eine Metallblech (311) und die mehreren Abstandshalter (313), die der Anordnung der Antenne (40) in ihrer Position entsprechen.

11. Elektronische Vorrichtung (100) nach Anspruch 10, **dadurch gekennzeichnet, dass** jeder der mehreren Abstandshalter (313) aus einer Kunststoffzusammensetzung besteht.

12. Elektronische Vorrichtung (100) nach Anspruch 10, **dadurch gekennzeichnet, dass** jeder der mehreren Abstandshalter (313) entlang einer Richtung von einem an einer Seite des Metallblechs (311) angeordneten, benachbarten Abstandshalter (313) zu einem an einer gegenüberliegenden Seite des Metallblechs (311) angeordneten, anderen benachbarten Abstandshalter (311) eine Dicke von etwa 0,01 mm bis etwa 0,1 mm aufweist.

13. Elektronische Vorrichtung (100) nach Anspruch 10, **dadurch gekennzeichnet, dass** eine Dicke des Metallblechs (311) entlang einer Richtung von einem an einer Seite des Metallblechs (311) angeordneten, benachbarten Abstandshalter (313) zu einem an einer gegenüberliegenden Seite des Metallblechs (311) angeordneten, anderen benachbarten Abstandshalter (311) von etwa 0,4 mm bis etwa 1,0 mm beträgt.

14. Elektronische Vorrichtung (100) nach Anspruch 11, **dadurch gekennzeichnet, dass** jeder der mehreren Abstandshalter (313) durch UV-Bestrahlung aus einer Kunstharzzusammensetzung, anodischer Aluminiumoxidfolie, anodischer Titanoxidfolie oder anodischer Magnesiumoxidfolie gefertigt ist.

## Revendications

1. Boîtier (30), comprenant une partie principale (310) ; **caractérisé en ce que** la partie principale (310) définit une encoche ; le boîtier (30) comprend en outre au moins une feuille métallique (311) et une pluralité d'espaceurs (313), pour l'au moins une feuille métallique (311) et la pluralité d'espaceurs (313) se positionnant alternativement dans l'encoche, et, l'au moins une feuille métallique (311) et la partie principale (310) liées ensemble par la pluralité d'espaceurs (313).

2. Boîtier (30) selon la revendication 1, **caractérisé en ce que** chacun de la pluralité d'espaceurs (313) est composé de composition plastique.

3. Boîtier (30) selon la revendication 1, **caractérisé en ce que** chacun de la pluralité d'espaceurs (313) présente une épaisseur d'environ 0,01 mm à environ 0,1 mm selon une direction à partir d'un espaceur adjacent (313) situé sur un côté de la feuille métallique (311) à une autre feuille métallique adjacente (311) située sur un côté opposé de la feuille métallique (311).

4. Boîtier (30) selon la revendication 1, **caractérisé en ce qu'**une épaisseur de l'au moins une feuille métallique (311) est d'environ 0,4 mm à environ 1,0 mm selon une direction à partir d'un espaceur adjacent (313) situé sur un côté de la feuille métallique (311) à une autre feuille métallique adjacente (311) située sur un côté opposé de la feuille métallique (311).

5. Boîtier (30) selon la revendication 2, **caractérisé en ce que** chacun de la pluralité d'espaceurs (313) est constitué d'une composition de résine par irradiation UV, d'un film d'alumine anodique, d'un film d'oxyde de titane anodique, ou d'un film d'oxyde de magnésium anodique.

6. Procédé de fabrication d'un boîtier (30) comprenant la fourniture d'une partie principale (310), **caractérisé en ce que** la partie principale (310) présente une encoche ; le procédé comprend en outre :
la fourniture d'au moins une feuille métallique (311), le placement de l'au moins une feuille métallique (311) dans l'encoche ; et
la formation d'une pluralité d'espaceurs (313) entre la partie principale (310) et l'au moins une feuille métallique (311), pour l'au moins une feuille métallique (311) et la pluralité d'espaceurs (313) se positionnant alternativement dans l'encoche, et l'au moins une feuille métallique (311) et la partie principale (310) liées ensemble par la pluralité d'espaceurs (313).

7. Procédé selon la revendication 6, **caractérisé en ce que** le procédé comprend en outre la formation d'une pluralité de petits trous sur la partie principale (310) et l'au moins une feuille métallique (311) par gravure chimique ou gravure électrochimique, dans lequel un diamètre de chacun des trous est d'environ 15 µm à environ 100 µm.

8. Procédé selon la revendication 6, **caractérisé en ce que** chacun de la pluralité d'espaceurs (313) présente une épaisseur d'environ 0,01 mm à environ 0,1 mm selon une direction à partir d'un espaceur adjacent (313) situé sur un côté de la feuille métallique (311) à une autre feuille métallique adjacente (311) située sur un côté opposé de la feuille métallique (311).

9. Procédé selon la revendication 6, **caractérisé en ce que** l'épaisseur de la feuille métallique (311) est d'environ 0,4 mm à environ 1,0 mm selon une direction à partir d'un espaceur adjacent (313) situé sur un côté de la feuille métallique (311) à une autre feuille métallique adjacente (311) située sur un côté opposé de la feuille métallique (311).

10. Dispositif électronique (100), comprenant :
un corps principal (10), un boîtier (30) monté sur le corps principal (10) et une antenne (40) assemblée dans le boîtier (30) ;
le dispositif électronique (100) **caractérisé en ce que** le boîtier (30) est tel que revendiqué dans la revendication 1 ; et
l'au moins une feuille métallique (311) et la pluralité d'espaceurs (313) dont la position correspond à l'antenne (40).

11. Dispositif électronique (100) selon la revendication 10, **caractérisé en ce que** chacun de la pluralité d'espaceurs (313) est composé de composition plastique.

12. Dispositif électronique (100) selon la revendication 10, **caractérisé en ce que** chacun de la pluralité d'espaceurs (313) présente une épaisseur d'environ 0,01 mm à environ 0,1 mm selon une direction à partir d'un espaceur adjacent (313) situé sur un côté de la feuille métallique (311) à une autre feuille métallique adjacente (311) située sur un côté opposé de la feuille métallique (311).

13. Dispositif électronique (100) selon la revendication 10, **caractérisé en ce qu'**une épaisseur de la feuille métallique (311) est d'environ 0,4 mm à environ 1,0 mm selon une direction à partir d'un espaceur adjacent (313) situé sur un côté de la feuille métallique (311) à une autre feuille métallique adjacente (311) située sur un côté opposé de la feuille métallique (311).

14. Dispositif électronique (100) selon la revendication 11, **caractérisé en ce que** chacun de la pluralité d'espaceurs (313) est constitué d'une composition de résine par irradiation UV, d'un film d'alumine anodique, d'un film d'oxyde de titane anodique, ou d'un film d'oxyde de magnésium anodique.
